# EUROPEAN PATENT SPECIFICATION

(11) **EP 2 677 529 B1**
(45) Date of publication and mention of the grant of the patent: **24.12.2014**
(21) Application number: 13173169.7
(22) Date of filing: 21.06.2013
(51) Int. Cl.: H01H 19/32, H01H 25/06, H01H 19/11, B60Q 1/14

(54) **Rotary switch device**
Drehschaltervorrichtung
Dispositif de commutateur rotatif

(30) Priority: 21.06.2012 JP 2012139637
(43) Date of publication of application: 25.12.2013
(73) Proprietor: KABUSHIKI KAISHA TOKAI RIKA DENKI SEISAKUSHO, Niwa-gun, Aichi 480-0195 (JP)
(72) Inventor: Nishimura, Tadao, Niwa-gun, Aichi 480-0195 (JP)
(74) Representative: Grünecker, Kinkeldey, Stockmair & Schwanhäusser

(56) References cited:
- EP-A1- 0 389 366
- EP-A1- 0 577 499
- EP-A2- 1 312 503
- DE-A1-102006 004 216
- US-A1- 2012 097 508

## Description

### BACKGROUND

The invention relates to a rotary switch device having improved a click-feeling structure.

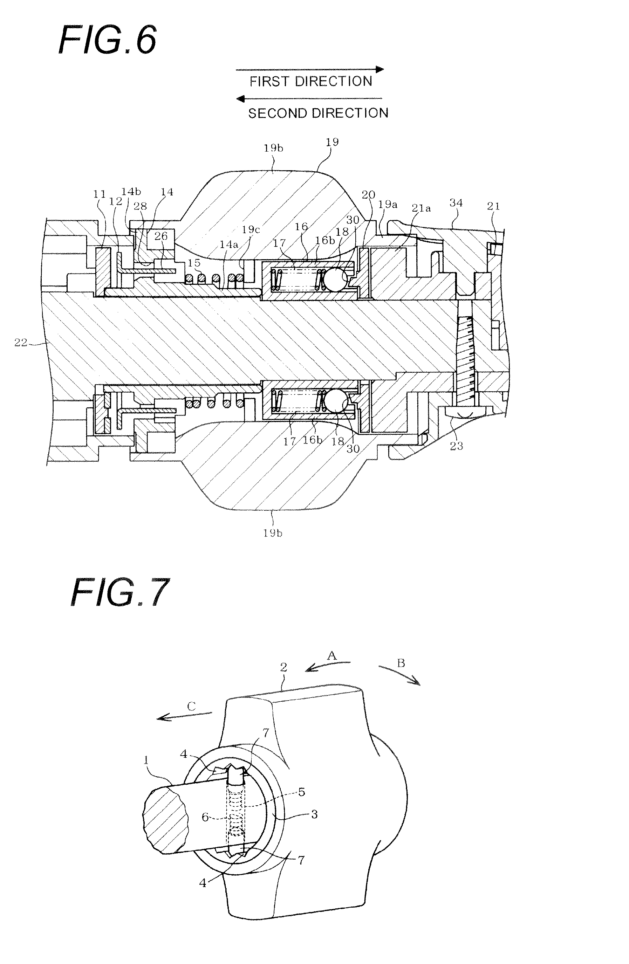

For example, FIG. 7 shows a rotary switch device that is used for a shift transmission operation of a vehicle and the like (refer to FIG. 7).

The rotary switch device includes a lever 1 and an operation knob 2 mounted to the lever 1 so that it can be moved in an axial direction of the lever 1 and can be rotated around the lever 1. At a normal state, when the operation knob 2 is rotated in a counterclockwise direction shown with an arrow A, a contact operation is made in a vehicle-advancing direction. At this time, a rotating operation of the operation knob 2 in a clockwise direction shown with an arrow B is prohibited by a so-called interlock structure.

The rotating operation of the operation knob 2 in the clockwise direction is a contact operation in a vehicle-retreating direction. To this end, the operation knob 2 is first moved in the axial direction shown with an arrow C. By doing so, the interlock is released. Then, the operation knob 2 is rotated in the clockwise direction with being axially moved (with the interlock being released). Thereby, the contact operation is made in the vehicle-retreating direction.

That is, in order to make the contact operation in the vehicle-advancing direction, the operation knob 2 is simply rotated in the counterclockwise direction. However, in order to make the contact operation in the vehicle-retreating direction, which requires the attention, the operation knob 2 is axially moved and then rotated in the clockwise direction at that state. That is, it is not possible to simply perform the contact operation in the vehicle-retreating direction, which requires the attention.

A click-feeling block 3 is mounted to the operation knob 2 as regards the rotating operations of the operation knob 2 in the counterclockwise and clockwise directions. The click-feeling block 3 of a ring shape has click-feeling grooves 4 at inner peripheries of both sides in a radial direction, which have a number corresponding to the contact operations by the operation knob 2, is fixed to the operation knob 2 so that it is axially moved and rotated together with the operation knob, and is fitted and inserted to the lever 1 so that it is axially moved together with the lever 1 and rotated around the lever 1.

Also, the lever 1 is formed with a hole 5 that opens in the radial direction. Click-feeling springs 6 that are inserted into the hole 5 press two click-feeling pieces 7 at both sides in the radial direction. Thereby, the click-feeling pieces 7 are respectively engaged to the click-feeling grooves 4 of the click-feeling block 3, thereby providing click-feeling to the rotating operation of the operation knob 2 in the counterclockwise and clockwise directions. The applicant provides JP-A-6-331009 as a related document.

The related art adopts the configuration where the lever 1 is formed with the hole 5 that opens in the radial direction, the click-feeling springs 6 inserted into the hole 5 press the two click-feeling pieces 7 at both sides in the radial direction and the click-feeling pieces 7 are respectively engaged to the click-feeling grooves 4 of the click-feeling block 3 to thus provide the click-feeling to the rotating operation of the operation knob 2 in the counterclockwise and clockwise directions. That is, when the click-feeling springs 6 apply an elastically repulsive force in the axial direction of the operation knob 2, a moving operation of the operation knob 2, which releases the interlock, is performed against the elastically repulsive force of the click-feeling springs 6. As a result, the moving operation of the operation knob 2 becomes stiff and the rotating operation of the operation knob 2 that is performed against the click-feeling provision structure becomes stiff.

In the above configuration of the related art, the click-feeling springs 6 apply the elastically repulsive force in the radial direction of the operation knob 2 and the moving operation of the operation knob 2 in the direction releasing the interlock and the rotating operation of the operation knob 2 are not stiff. However, in order to implement the above configuration where the click-feeling pieces 7 are diametrically mounted from the click-feeling springs 6 and the click-feeling block 3 having the click-feeling grooves 4 at the outer sides thereof in the radial direction is provided, the switch device is entirely enlarged in the radial direction. As a result, the problems that the operation is difficult and an outward appearance is not good are caused.

EP-A-0389366 discloses a rotary switch device according to the preamble of claim 1.

### SUMMARY

The invention has been made keeping in mind the above situations, and an object of the invention is to provide a rotary switch device that can be made to be entirely smaller in a radial direction.

In order to achieve the above object, according to the present invention, there is provided a rotary switch device comprising:
a lever 22;
an operation knob 19 configured to move in an axial direction of the lever 22 and rotate around an axis of the lever 22;
a movable contact 12 configured to move based on a rotation operation of the operation knob 19 in a state that the operation knob 19 is moved from a first position to a second position in the axial direction;
a fixed contact 11 configured to contact to or separate from the movable contact;
a click-feeling block 20 configured to be fixed in the axial direction and rotate around the axis of the lever 22 together with the operation knob 19;
an engaging means 29,32 provided between the click-feeling block 20 and the operation knob 19, and configured to transmit a rotation of the rotation operation of the operation knob 19 to the click-feeling block 20 and not to affect on the click-feeling block 20 by a movement of the operation knob 19 in the axial direction; and
a click-feeling spring 17 configured to bias a click-feeling piece against one of a plurality of groove parts in the click-feeling block to provide a click feeling to the rotation operation of the operation knob 19.

For example, the engaging means 29,32 includes: a protrusion 29 configured to be formed on an inner periphery of the operation knob 19 and be extended in the axial direction; and a groove part 32 configured to be formed on the click-feeling block 20 and to be extended in the axial direction, and the protrusion 29 is fit in the groove part 32.

For example, the rotary switch device further comprises a click-feeling holder 16 configured to contain the click-feeling spring 17 and the click-feeling piece therein, the click-feeling holder 16 is configured to be fixed in the axial direction and be fixed so as not to rotate around the axis of the lever 22.

For example, the rotary switch device further comprises a fixing member 21 a configured to fix the click-feeling block 20, and the fixing member 21a is configured to prevent a movement of the click-feeling block 20 in a first direction opposite to a second direction in which the operation knob 19 moves from the first position to the second position.

For example, the click-feeling spring 17 and the click-feeling piece are configured to prevent a movement of the click-feeling block 20 in a second direction in which the operation knob 19 moves from the first position to the second position.

For example, the plurality of groove parts 32 are arranged in a circumference around the axis of the lever 22.

For example, the click-feeling spring 17, the click-feeling piece and the click-feeling block 20 are arranged in the axial direction.

According to the above configurations, it is possible to move the operation knob in the axial direction without moving the click-feeling block in the axial direction. Thereby, even when the click-feeling spring is mounted so as to apply an elastically repulsive force in the axial direction, an moving operation of the operation knob in the axial direction is not performed against the elastically repulsive force (bias force) of the click-feeling spring, so that it is possible to prevent both the moving operation of the operation knob in the axial direction and the rotating operation of the operation knob from being stiff. By doing so, even when the click-feeling piece and the click-feeling block are mounted with being axially arranged from the click-feeling spring, it is possible to prevent both the moving operation of the operation knob and the rotating operation of the operation knob in the axial direction from being stiff. Also, since the click-feeling piece and the click-feeling block are not arranged in a radial direction of the lever from the click-feeling spring, it is possible to realize the miniaturization of the entire switch device in the radial direction.

### BRIEF DESCRIPTION OF THE DRAWINGS

The above objects and advantages of the present invention will become more apparent by describing in detail preferred exemplary embodiments thereof with reference to the accompanying drawings, wherein:
FIG. 1 is a pictorial longitudinal sectional side view showing a normal state of main parts of a first illustrative embodiment of the invention;
FIG. 2 is a pictorial longitudinal side view showing an operating state of the main parts;
FIG. 3 is a pictorial front view of the main parts;
FIG. 4 is a pictorial perspective view of the main parts;
FIG. 5 is an exploded perspective view of the substantial entire;
FIG. 6 is a pictorial longitudinal sectional side view showing the normal state of the main parts; and
FIG. 7 is a view showing an example of the related art, which corresponds to FIG. 4.

### DETAILED DESCRIPTION OF EXEMPLARY EMBODIMENTS

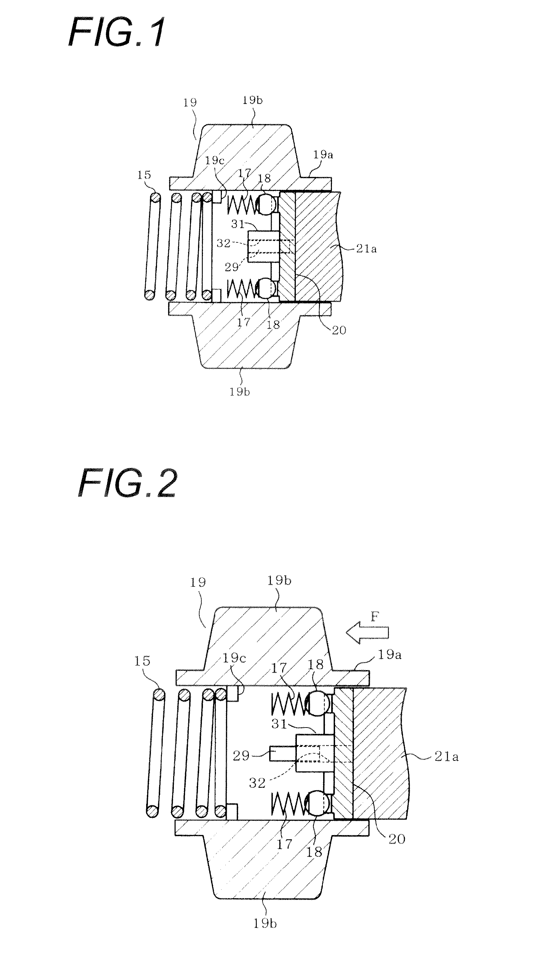

Hereinafter, a first illustrative embodiment of the invention will be described with reference to FIGS. 1 to 6.

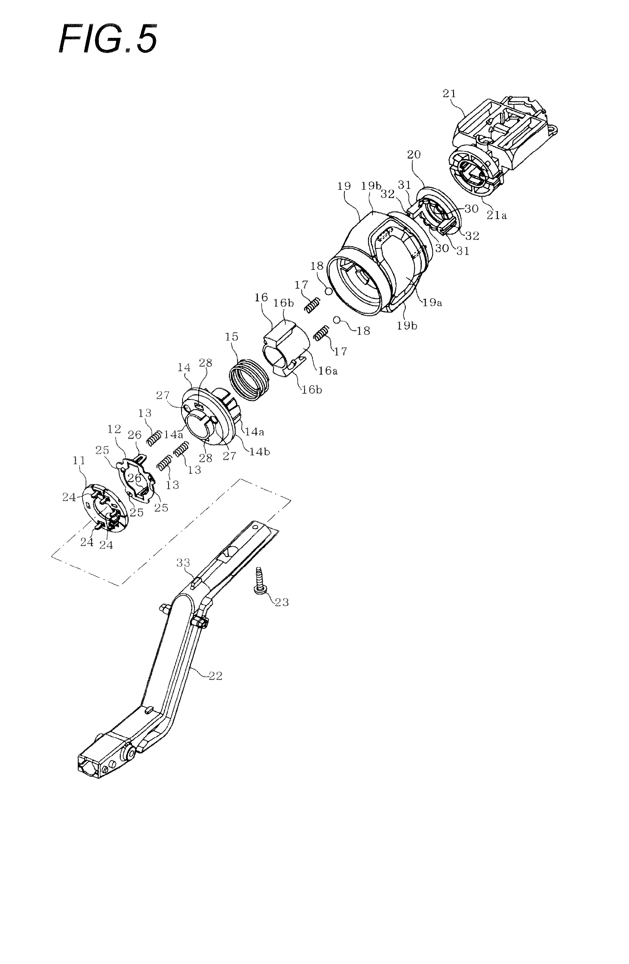

First, FIG. 5 is an exploded perspective view of a rotary switch device that is provided for a shift transmission operation for a vehicle, particularly an automobile, in which an insulator 11, a movable contact 12, contact springs 13, a contact holder 14, an interlock spring 15, a click-feeling holder 16, click-feeling springs 17, click-feeling pieces 18, an operation knob 19, a click-feeling block 20 and an end cap base 21 are shown in corresponding order from the front side (the left side in FIG. 5), and a lever 22 and a screw 23 are also shown.

The insulator 11 of a ring shape has a plurality of fixed contacts (not shown) made of a conductive material on a right side surface thereof and a plurality of connection terminals 24 that continues from the fixed contacts and protrudes in a left direction of FIG. 5.

The movable contact 12 also has a ring shape, is made of a conductive material and has contacts 25 (three contacts, in this case) corresponding to the fixed contacts on a left side surface thereof in FIG. 5 and two upper and lower arm parts 26 on a right side surface.

The contact springs 13 press-contacts the movable contact 12 (contacts 25) to the fixed contacts. In this case, the three contact springs are provided in correspondence to the number of the contacts 25.

The contact holder 14 holds the contact springs 13 and the movable contact 12, has a step-shaped flange part 14b on an outer periphery of a cylindrical part 14a thereof and is formed at the flange part 14b with three holes 27 (only two holes are shown) for accommodating therein the contact springs 13 and with two holes 28 through which the arm parts 26 of the movable contact 12 are inserted.

The interlock spring 15 has a coil shape having a diameter that is fitted onto the outer periphery of the cylindrical part 14a of the contact holder 14.

The click-feeling holder 16 has accommodation parts 16b at upper and lower parts of the cylindrical part 16a.

The click-feeling springs 17 are accommodated in the accommodation parts 16b of the click-feeling holder 16, and the two click-feeling springs are provided at the upper and lower.

The click-feeling pieces 18 have a spherical shape and are accommodated in the accommodation parts 16b of the click-feeling holder 16 together with the click-feeling springs 17, and the two click-feeling pieces are provided at the upper and lower.

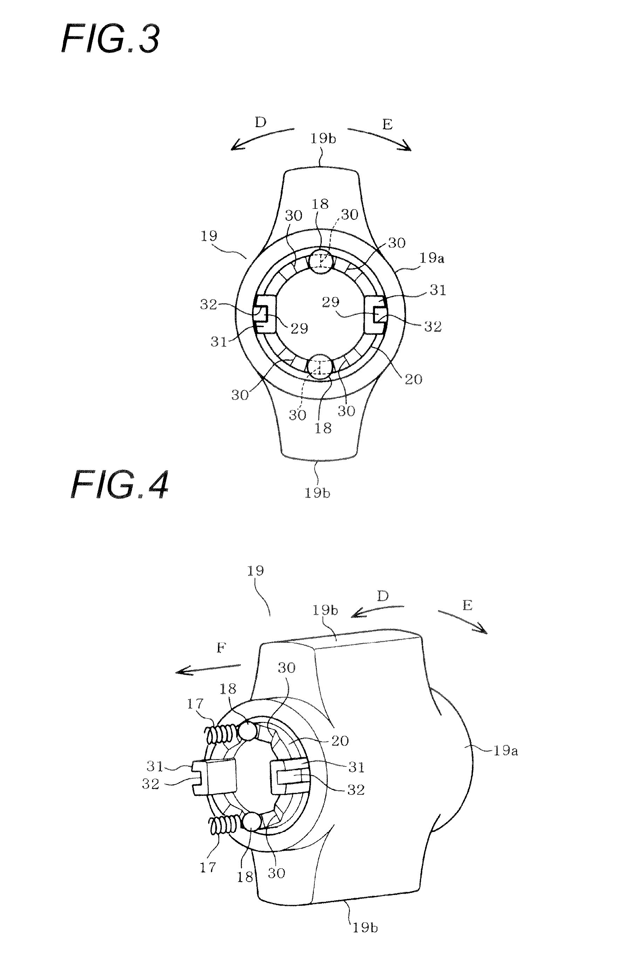

The operation knob 19 has a cylindrical part 19a having a diameter larger than the click-feeling holder 16, the interlock spring 15 and the contact holder 14, finger holders 19b that protrude from upper and lower parts of the cylindrical part 19a and protrusions 29 serving as an engaging part, which axially extend from two left and right positions of an inner periphery, as shown in FIGS. 3, 1 and 2. Also, the operation knob 19 has spring seat projections 19c (refer to FIGS. 1, 2 and 6) at an inside of the cylindrical part 19a.

The click-feeling block 20 has a ring shape having a diameter slightly smaller than the contact holder 14, projections 31 at a side facing the click-feeling pieces 18, which arrange the click-feeling grooves 30 three-by-three in a circumferential direction to be symmetric in the upper-lower direction and axially protrude from two left and right positions, and groove parts 32 on outer sides of the projections 31, which axially extend as parts to be engaged corresponding to the protrusions 29 of the operation knob 19.

The end cap base 21 fixes the click-feeling block 20 so that the click-feeling block 20 cannot be moved in the opposite axial direction (first direction in Fig. 6) to the click-feeling pieces 18, and has a fixing part 21 a at a side facing the click-feeling pieces 19.

As shown with the dashed-dotted line in FIG. 5, the lever 22 is inserted from the insulator 11 to the movable contact 12, the contact holder 14, the interlock spring 15, the click-feeling holder 16, the operation knob 19, the click-feeling block 20 and the fixing part 21 a of the end cap base 21. A screw 23 is screw-inserted from the inserted lever 22 into the fixing part 21 a of the end cap base 21, so that the end cap base 21 is fixed to the lever 22.

Based on the above configuration, the insulator 11 is first fitted and inserted to the lever 22. The lever 22 is provided with a stopper 33, and the insulator 11 is fitted and inserted to the lever 22 until the insulator 11 is stopped to the stopper 33. As a result, the insulator 11 is fixed so that the insulator 11 cannot be axially moved forwards beyond the stopper 33, and is also fixed so that it cannot be rotated around the lever 22.

Then, the contact springs 13 are accommodated in the holes 27 and the arm parts 26 of the movable contact 12 are inserted into the holes 28, so that the movable contact 12 is coupled to the contact holder 14. Then, the contact holder 14 is fitted and inserted to the lever 22 and the movable contact 12 is opposed to the fixed contacts of the insulator 11. The contact holder 14 can be rotated around the lever 22 and cannot be moved in the axial direction of the lever 22 because it is checked by the insulator 11, and the movable contact 12 is pressed towards the insulator 11 (fixed contacts) by the contact springs 13 and is rotated together with the contact holder 14.

Then, the interlock spring 15 is fitted and inserted to the cylindrical part 14a of the contact holder 14 and the click-feeling holder 16 is fitted and inserted to the lever 22. The click-feeling holder 16 cannot be moved in the axial direction of the lever 22 because it is stopped by the cylindrical part 14a of the contact holder 14 and cannot be also rotated around the lever 22 by a fitting structure between the cylindrical part 16a and the lever 22. Also, the click-feeling springs 17 and the click-feeling pieces 18 are accommodated in the accommodation parts 16b of the click-feeling holder 16.

Then, the operation knob 19 is fitted and inserted from the click-feeling holder 16 over the interlock spring 15 and the contact holder 14. Thereby, the interlock spring 15 is interposed between the flange part 14b of the contact holder 14 and the spring seat projections 19c of the operation knob 19.

Then, the click-feeling block 20 is fitted and inserted to the lever 22, which is then inserted into the operation knob 19. The operation knob 19 can be moved in the axial direction of the lever 22 relative to the click-feeling block 20. Also, the click-feeling block 20 can be rotated around the lever 22. Also, at this time, the protrusions 29 of the operation knob 19 are fitted and inserted to the groove parts 32 of the projections 31 of the click-feeling block 20. The operation knob 19 can be moved in the axial direction of the lever 22 and can be also rotated around the lever 22. At this time, the operation knob is rotated together with the contact holder 14.

Also, in the operation knob 19, the end cap base 21 is fitted and inserted to the lever 22 until the fixing part 21a is contacted to the click-feeling block 20, and an end cap 34 shown in FIG. 6 is mounted to the end cap base 21. After that, the screw 23 is screw-inserted from the end cap 34 to the lever 22 through the fixing part 21 a of the end cap base 21, so that the end cap 34 and the end cap base 21 are co-fastened and fixed to the lever 22.

FIG. 6 shows the entire structure of the rotary switch device mounted as described above and FIGS. 1, 2, 3 and 4 pictorially show the entire structure of the same rotary switch device. In particular, as shown in FIGS. 3 and 4, the click-feeling pieces 18 pressed (biased) by the click-feeling springs 17 are press-contacted to the click-feeling grooves 30 (particularly, the central click-feeling grooves 30 at neutral positions) of the click-feeling block 20 from an opposite side to the fixing part 21a of the end cap base 21 in the axial direction.

Also, although not specifically shown, the rotary switch device of the illustrative embodiment has an interlock structure of prohibiting the rotating operation of the operation knob 19 in a specific direction (in this case, the clockwise direction shown with an arrow E in FIGS. 3 and 4) at a normal state.

In the rotary switch device of the illustrative embodiment configured as described above, at the normal state, when the operation knob 19 is rotated in the counterclockwise direction shown with an arrow D of FIGS. 3 and 4, the contact holder 14 is also rotated in the counterclockwise direction along the movable contact 12 and the movable contact 12 is contacted to the contacts of the pair, in the vehicle-advancing direction, of the fixed contacts of the insulator 11, i.e., the contact operation is made in the vehicle-advancing direction. At this time, the rotating operation of the operation knob 19 in the clockwise direction shown with the arrow E is prohibited by the interlock structure.

Also, the click-feeling block 20 is rotated in the rotation direction of the operation knob 19 through the engaging structure between the protrusions 29 of the operation knob 19 and the groove parts 32 of the click-feeling block 20, and the click-feeling grooves 30 positioned in the clockwise direction of the operation knob 19 from the central click-feeling grooves 30 are engaged with the click-feeling pieces 18 to thus provide the click-feeling to the rotation of the operation knob 19.

On the other hand, when the operation knob 19 is moved from a first position to a second position in the axial direction shown with an arrow F in FIGS. 2 and 4 against the elastically repulsive force of the interlock spring 15, the interlock is released. Then, the operation knob 19 is rotated in the clockwise direction shown with the arrow E at the second position (with the interlock being released). By doing so, the contact holder 14 follows the movable contact. In this case, the contact holder 14 is rotated in the clockwise direction and the movable contact 12 is contacted to the contacts of the pair, in the vehicle-retreating direction, of the fixed contacts of the insulator 11, i.e., the contact operation is made in the vehicle-retreating direction.

Also, at this time, even when the operation knob 19 is moved in the axial direction of the lever from the first position to the second position, the click-feeling block 20 remains at the contact position with the fixing part 21a of the end cap base 21, i.e., the click-feeling block 20 is not moved in the axial direction and the protrusions 29 of the operation knob 19 are slidingly moved in the groove parts 32 of the click-feeling block 20 in the moving direction of the operation knob 19 (second direction in FIG. 6), as shown in FIG. 2.

After that, at the time that the operation knob 19 is rotated in the clockwise direction, the click-feeling block 20 is rotated in the rotation direction of the operation knob 19 through the engaging structure between the protrusions 29 of the operation knob 19 and the groove parts 32 of the click-feeling block 20, and the click-feeling grooves 30 positioned in the counterclockwise direction of the operation knob 19 from the central click-feeling grooves 30 are engaged with the click-feeling pieces 18 to thus provide the click-feeling to the rotation of the operation knob 19.

Therefore, the protrusions 29 and the groove parts 32 serve as the engaging means that are engaged in the rotation direction of the operation knob 19 to thus transmit the rotation of the operation knob 19 to the click-feeling block 20 and are slidingly moved in the moving direction not to thus transmit the moving of the operation knob 19 to the click-feeling block 20 between the click-feeling block 20 and the operation knob 19, and the fixing part 21a of the end cap base 21 serves as the fixing member that fixes the click-feeling block 20 so that it cannot be moved in the opposite direction to the moving direction to the rotation position at which the movable contact 12 of the operation knob 19 reacts.

As described above, according to the rotary switch device of the illustrative embodiment, it is possible to move the operation knob 19 in the axial direction without moving the click-feeling block 20 in the axial direction. Thereby, even when the click-feeling springs 17 are mounted so as to axially apply the elastically repulsive force, the axial moving operation of the operation knob 19 is not performed against the elastically repulsive force of the click-feeling springs 17, so that it is possible to prevent both the moving operation of the operation knob 19 in the axial direction and the rotating operation of the operation knob 19 from being stiff. By doing so, even when the click-feeling pieces 18, the click-feeling springs 17 and the click-feeling block 20 are arranged in the axial direction, it is possible to prevent both the moving operation of the operation knob 19 in the axial direction and the rotating operation of the operation knob 19 from being stiff. Also, since the click-feeling pieces 18, the click-feeling springs 17 and the click-feeling block 20 are not arranged in the radial direction of the lever 22, it is possible to realize the miniaturization of the entire switch device in the radial direction.

Also, the invention is not limited to the illustrative embodiment shown in the drawings, and particularly, is not limited to the case where the entire switch device is used for the shift transmission operation of the vehicle. Also, the interlock structure is not necessarily required (the movable contact has only to be contacted and separated to and from the fixed contacts by the rotating operation following the axial moving operation of the operation knob). Also, the contact and separation of the movable contact to and from the fixed contacts by the rotating operation of the operation knob at the normal state are not necessarily required. That is, the invention can be appropriately changed and implemented without departing from the gist.

In the drawings, the reference numeral 11 denotes the insulator (fixed contact), the reference numeral 12 denotes the movable contact, the reference numeral 17 denotes the click-feeling spring, the reference numeral 18 denotes the click-feeling piece, the reference numeral 19 denotes the operation knob, the reference numeral 20 denotes the click-feeling block, the reference numeral 21 a denotes the fixing part (fixing member) of the end cap base, the reference numeral 29 denotes the protrusion (engaging means) and the reference numeral 32 denotes the groove part (engaging means).

## Claims

1. A rotary switch device comprising:
a lever 22;
an operation knob 19 configured to move in an axial direction of the lever 22 and rotate around an axis of the lever 22;
a movable contact 12 configured to move based on a rotation operation of the operation knob 19 in a state that the operation knob 19 is moved from a first position to a second position in the axial direction;
a fixed contact 11 configured to contact to or separate from the movable contact;
a click-feeling spring 17 configured to bias a click-feeling piece against one of a plurality of groove parts in the click-feeling block 20 to provide a click feeling to the rotation operation of the operation knob 19 and
a click-feeling block 20 configured to be fixed in the axial direction and rotate around the axis of the lever 22 together with the operation 19;
an engaging means 29,32 provided between the click-feeling block 20 and the operation knob 19, and configured to transmit a rotation of the rotation operation of the operation knob 19 to the click-feeling block 20 and not to affect on the click-feeling block 20 by a movement of the operation knob 19 in the axial direction.

2. The rotary switch device according to claim 1, wherein the engaging means 29,32 includes:
a protrusion 29 configured to be formed on an inner periphery of the operation knob 19 and be extended in the axial direction; and
a groove part 32 configured to be formed on the click-feeling block 20 and to be extended in the axial direction; and
wherein the protrusion 29 is fit in the groove part 32.

3. The rotary switch device according to claim 1 or 2, further comprising:
a click-feeling holder 16 configured to contain the click-feeling spring 17 and the click-feeling piece therein,
wherein the click-feeling holder 16 is configured to be fixed in the axial direction and be fixed so as not to rotate around the axis of the lever 22.

4. The rotary switch device according to any one of claims 1 to 3, further comprising:
a fixing member 21 a configured to fix the click-feeling block 20,
wherein the fixing member 21 a is configured to prevent a movement of the click-feeling block 20 in a first direction opposite to a second direction in which the operation knob 19 moves from the first position to the second position.

5. The rotary switch device according to any one of claims 1 to 4, wherein the click-feeling spring 17 and the click-feeling piece are configured to prevent a movement of the click-feeling block 20 in a second direction in which the operation knob 19 moves from the first position to the second position.

6. The rotary switch device according to any one of claims 1 to 5, wherein the plurality of groove parts 32 are arranged in a circumference around the axis of the lever 22.

7. The rotary switch device according to any one of claims 1 to 6, wherein the click-feeling spring 17, the click-feeling piece and the click-feeling block 20 are arranged in the axial direction.

## Patentansprüche

1. Drehschaltervorrichtung, umfassend:
einen Hebel 22;
einen Betätigungsknopf 19, der dazu eingerichtet ist, sich in einer Achsrichtung auf dem Hebel 22 zu bewegen und sich um eine Achse des Hebels 22 zu drehen;
einen beweglichen Kontakt 12, der dazu eingerichtet ist, sich auf der Basis einer Drehbetätigung des Betätigungsknopfes 19 in einem Zustand zu bewegen, in dem der Betätigungsknopf 19 von einer ersten Position in eine zweite Position in der Achsrichtung bewegt wird;
einen feststehenden Kontakt 11, der dazu eingerichtet ist, den beweglichen Kontakt zu berühren oder sich von diesem zu trennen;
einen Klickgefühlsblock 20, der dazu eingerichtet ist, in der Achsrichtung befestigt zu sein und sich um die Achse des Hebels 22 zusammen mit dem Betätigungsknopf 19 zu drehen;
eine Eingreifeinrichtung 29, 32, die zwischen dem Klickgefühlsblock 20 und dem Betätigungsknopf 19 vorgesehen und dazu eingerichtet ist, eine Drehung der Drehbetätigung des Betätigungsknopfes 19 auf den Klickgefühlsblock 20 zu übertragen und nicht auf den Klickgefühlsblock 20 durch eine Bewegung des Betätigungsknopfes 19 in der Achsrichtung zu wirken; und
eine Klickgefühlsfeder 17, die dazu eingerichtet ist, ein Klickgefühlsbauteil gegen einen einer Vielzahl von Rillenteilen in dem Klickgefühlsblock 20 vorzuspannen, um ein Klickgefühl bei dem Drehvorgang des Betätigungsknopfes 19 zu erzeugen.

2. Drehschaltervorrichtung nach Anspruch 1, bei der die Eingreifeinrichtung 29, 32 umfasst:
einen Vorsprung 29, der derart beschaffen ist, dass er auf einem Innenumfang des Betätigungsknopfes 19 ausgebildet ist und sich in der Achsrichtung erstreckt; und
einen Rillenteil 32, der derart beschaffen ist, dass er auf dem Klickgefühlsblock 20 ausgebildet ist und sich in der Achsrichtung erstreckt;
wobei der Vorsprung 29 in den Rillenteil 32 eingepasst ist.

3. Drehschaltervorrichtung nach Anspruch 1 oder 2, weiterhin umfassend:
einen Klickgefühlshalter 16, der so beschaffen ist, dass er die Klickgefühlsfeder 17 und das Klickgefühlsbauteil in sich aufnimmt,
wobei der Klickgefühlshalter 16 derart beschaffen ist, dass er in der Achsrichtung fixiert ist und derart fixiert ist, dass er sich nicht um die Achse des Hebels 22 dreht.

4. Drehschaltervorrichtung nach einem der Ansprüche 1 bis 3, weiterhin umfassend:
ein Fixierelement 21 a, das dazu eingerichtet ist, den Klickgefühlsblock 20 zu fixieren,
wobei das Fixierelement 21a dazu eingerichtet ist, eine Bewegung des Klickgefühlsblocks 20 in einer ersten Richtung entgegengesetzt zu einer zweiten Richtung zu verhindern, in der sich der Betätigungsknopf 19 von der ersten Position in die zweite Position bewegt.

5. Drehschaltervorrichtung nach einem der Ansprüche 1 bis 4, bei der die Klickgefühlsfeder 17 und das Klickgefühlsbauteil dazu eingerichtet sind, eine Bewegung des Klickgefühlsblocks 20 in eine zweite Richtung zu verhindern, in der sich der Betätigungsknopf 19 von der ersten Position in die zweite Position bewegt.

6. Drehschaltervorrichtung nach einem der Ansprüche 1 bis 5, bei der die Vielzahl von Rillenteilen 32 in einem Umfang um die Achse des Hebels 22 angeordnet ist.

7. Drehschaltervorrichtung nach einem der Ansprüche 1 bis 6, bei der die Klickgefühlsfeder 17, das Klickgefühlsbauteil und der Klickgefühlsblock 20 in der Achsrichtung angeordnet sind.

## Revendications

1. Dispositif commutateur rotatif comprenant :
un levier 22 ;
un bouton d'actionnement 19 configuré pour se déplacer en direction axiale du levier 22 et pour tourner autour d'un axe du levier 22 ;
un contact mobile 12 configuré pour se déplacer sur base d'un actionnement de rotation du bouton d'actionnement 19 dans un état où le bouton d'actionnement 19 est déplacé d'une première position à une deuxième position dans la direction axiale ;
un contact fixe 11 configuré pour contacter le contact mobile ou se séparer de celui-ci ;
un bloc de détection de déclic 20 configuré pour être fixé dans la direction axiale et pour tourner autour de l'axe du levier 22 conjointement au fonctionnement 19 ;
un moyen d'engagement 29, 32 pourvu entre le bloc de détection de déclic 20 et le bouton d'actionnement 19, et configuré pour transmettre une rotation de l'actionnement de rotation du bouton d'actionnement 19 au bloc de détection de déclic 20 et pour ne pas affecter le bloc de détection de déclic 20 par un mouvement du bouton d'actionnement 19 dans la direction axiale ; et
un ressort de détection de déclic 17 configuré pour forcer une pièce de détection de déclic contre une partie d'une pluralité de parties de rainure dans le bloc de détection de déclic 20 pour fournir une détection de déclic à l'actionnement de rotation du bouton d'actionnement 19.

2. Dispositif commutateur rotatif selon la revendication 1, dans lequel le moyen d'engagement 29, 32 comprend :
une protubérance 29 configurée pour être formée sur une périphérie interne du bouton d'actionnement 19 et pour être étendu dans la direction axiale ; et
une partie de rainure 32 configurée pour être formée sur le bloc de détection de déclic 20 et pour être étendu dans la direction axiale ; et
dans lequel la protubérance 29 est adaptée dans la partie de rainure 32.

3. Dispositif commutateur rotatif selon la revendication 1 ou 2, comprenant en outre :
un support de détection de déclic 16 configuré pour y agencer le ressort de détection de déclic 17 et la pièce de détection de déclic,
dans lequel le support de détection de déclic 16 est configuré pour être fixé dans la direction axiale et pour être fixé de manière à ne pas tourner autour de l'axe du levier 22.

4. Dispositif commutateur rotatif selon l'une quelconque des revendications 1 à 3, comprenant en outre :
un élément de fixation 21a configuré pour fixer le bloc de détection de déclic 20,
dans lequel l'élément de fixation 21a est configuré pour éviter un déplacement du bloc de détection de déclic 20 dans une première direction opposée à une deuxième direction dans laquelle le bouton d'actionnement 19 se déplace de la première position à la deuxième position.

5. Dispositif commutateur rotatif selon l'une quelconque des revendications 1 à 4, dans lequel le ressort de détection de déclic 17 et la pièce de détection de déclic sont configurés pour éviter un déplacement du bloc de détection de déclic 20 dans une deuxième direction dans laquelle le bouton d'actionnement 19 se déplace de la première position à la deuxième position.

6. Dispositif commutateur rotatif selon l'une quelconque des revendications 1 à 5, dans lequel les parties de la pluralité de parties de rainure 32 sont agencées sur une circonférence autour de l'axe du levier 22.

7. Dispositif commutateur rotatif selon l'une quelconque des revendications 1 à 6, dans lequel le ressort de détection de déclic 17, la pièce de détection de déclic et le bloc de détection de déclic 20 sont agencés selon la direction axiale.
